# EUROPÄISCHE PATENTANMELDUNG

(11) **EP 1 147 950 A2**
(43) Veröffentlichungstag der Anmeldung: **24.10.2001**
(21) Anmeldenummer: 01101245.7
(22) Anmeldetag: 19.01.2001
(51) Int. Cl.: B60R 21/26

(54) **Gasgenerator, insbesondere für einen Airbag**

(30) Priorität: 17.04.2000 DE 10018915
(71) Anmelder: Biemold, Wilhelm, 3740 Bilzen (BE)
(72) Erfinder: Biemold, Wilhelm, 3740 Bilzen (BE)
(74) Vertreter: Naeven, Ralf, Dr.

(57) **Zusammenfassung**

**2.1.** Bekannte Gasgeneratoren mit, bei denen zur Fliehkraftabscheidung ein konzentrisch um eine Brennkammer angeordneter Ringraum vorgesehen ist, sind an der Umfangswand der Brennkammer Öffnungen für den Austritt der Reaktionsprodukte nach Zündung der Ladung vorgesehen und derart geformt, dass dem Gemisch der Reaktionsprodukte ein bestimmter Strömungsdrall beim Eintritt in den Ringraum aufgegeben wird. Die Ausbildung dieser Öffnungen ist aufwendig und somit kostenintensiv. Es soll nun ein Gasgenerator mit Fliehkraftabscheidung mit einem für die Herstellung vereinfachten Aufbau bereitgestellt werden.
**2.2.** Die Austrittsöffnungen (5) werden an zumindest einer Stirnwand (6,17) der Brennkammer (1) vorgesehen. Der gewünschte Drall für das austretende Gemisch der Reaktionsprodukte wird durch in Strömungsrichtung gesehen hinter der Austrittsöffnungen (5) angeordnete Deflektorelemente bewirkt.

## Beschreibung

Die Erfindung betrifft einen Gasgenerator, insbesondere für einen Airbag, umfassend mindestens eine ein gaserzeugendes Material enthaltende, durch eine Umfangswand und zwei Stirnwände begrenzte Brennkammer mit Austrittsöffnungen für die im Zündungsfall entstehenden Reaktionsprodukte, eine Fliehkraftabscheidereinheit mit einem im wesentlichen konzentrisch um die mindestens eine Brennkammer angeordneten, mindestens einen Gasauslass zum Airbag hin aufweisenden Ringraum sowie Mittel zur Erzeugung eines Strömungsdralls der durch die Austrittsöffnungen in den Ringraum gelangten Reaktionsprodukte.

Ein Gasgenerator der eingangs genannten Art ist aus der DE 197 16 652 A1 bekannt. Die Austrittsöffnungen für die Reaktionsprodukte sind dabei in der im wesentlichen zylindrischen Umfangswand der einen Brennkammer derart ausgebildet, dass die Reaktionsprodukte die Brennkammer nahezu in tangentialer Richtung verlassen. Hierdurch wird der Strömung der überwiegend gasförmigen Reaktionsprodukte ein Drall aufgegeben, so dass die im Airbag unerwünschten Festkörperteilchen aufgrund der Fliehkraft auf eine Zwischenwand des Ringraumes auftreffen. In der Zwischenwand sind durch Ausklinkungen Einfangöffnungen gebildet, die den radial außenliegenden Gasstrom und damit auch die Festkörperpartikel zum größten Teil auffangen und in einen Hohlraum hinter der Zwischenwand führen. Dieser Hohlraum ist mit Metallwolle gefüllt, an der die Partikel kondensieren und anhaften. Das von den Partikeln weitestgehend befreite Gas kann aus dem Hohlraum durch zusätzliche Öffnungen in der Zwischenwand wieder austreten und gelangt gemeinsam mit dem übrigen im Ringraum befindlichen Gas zum Gasauslass. Die Herstellung der den Strömungsdrall der Reaktionsprodukte im Ringraum erzeugenden Austrittsöffnungen ist aufwendig und damit kostenintensiv.

Aus der US 6 007 098 ist ein Gasgenerator für Airbags bekannt, bei dem die Gasaustritte in einer Stirnwand der Brennkammer vorgesehen sind. Der Gasgenerator weist jedoch keinen Fliehkraftabscheider auf. Die Gase werden nach ihrem Austritt aus der Brennkammer durch ein U-förmiges Filterelement aus Metall geführt, an dem die Reaktionsprodukte abkühlen und in dem Festkörperteilchen festgehalten werden sollen. Nachteilig ist an dieser Konstruktion, dass das Filterelement, durch den der komplette Gasstrom geführt ist, eine erhebliche Druckminderung bewirkt. Die Ablagerung der Festkörperpartikel trägt zusätzlich zur Druckminderung bei.

Aus der DE 198 22 654 A1 ist ein zweistufiger Gasgenerator mit zwei jeweils ein Zündelement aufweisenden im wesentlichen zylindrischen Brennkammern bekannt. Die Brennkammern befinden sich an gegenüberliegenden Enden des Gasgenerators. Zwischen den Brennkammern ist eine als Fliehkraft-Staubabscheider ausgebildete Wirbelkammer angeordnet. Die Reaktionsprodukte treten in axialer Richtung des Gasgenerators, d. h. jeweils durch eine Stirnfläche der Brennkammern aus. Der Strömungsdrall der Reaktionsprodukte wird für das Material der ersten Brennkammer mittels speziell geformter und tangential ausgerichteter Austrittsöffnungen in der Wand der Wirbelkammer erzeugt. Die Reaktionsprodukte der zweiten Brennkammer treten ebenfalls durch eine Stirnwand der Brennkammer aus und werden in drei Rohre geführt, die an ihrem vorderen Ende bezüglich der Achse dieser Rohre radial ausgerichtete Öffnungen ausweist, so dass die Reaktionsprodukte im Wesentlichen in Umfangsrichtung in die Wirbelkammer eintreten. Die Erzeugung des Strömungsdralls ist bei diesem Stand der Technik sehr aufwendig und damit kostenintensiv. Zudem sind die Abmessungen dieses zweistufigen Gasgenerators relativ groß und daher nachteilig.

Es ist nun Aufgabe der vorliegenden Erfindung, einen Gasgenerator der eingangs genannten Art bereitzustellen, bei dem mit einem kostengünstigen und einfachen Aufbau wirkungsvoll ein Strömungsdrall der Reaktionsprodukte für die Fliehkraftabscheidung erzeugt wird.

Die Aufgabe wird bei einem Gasgenerator der eingangs genannten Art dadurch gelöst, dass sich die Austrittsöffnungen in zumindest einer der Stirnwände befinden und die Mittel zur Erzeugung eines Strömungsdralls in Strömungsrichtung der Reaktionsprodukte gesehen hinter den Austrittsöffnungen angeordnete Deflektorelemente umfassen.

Die Austrittsöffnungen können zylindrischen Bohrungen in der Stirnwand sein und sind somit sehr einfach zu erzeugen. Die Deflektorelemente sind ebenfalls einfach herstellbar und in Strömungsrichtung hinter den Austrittsöffnungen platzierbar, so dass insgesamt der Aufwand zur Strömungsdrallerzeugung gegenüber dem Stand der Technik deutlich verringert ist. Mit Hilfe der Deflektorelemente wird den ausströmenden Reaktionsprodukten, deren Flugrichtung zunächst im Wesentlichen axial in Bezug auf die Brennkammer ist, eine hierzu senkrechte Geschwindigkeitskomponente aufgegeben. Dabei können die Deflektorelemente so angeordnet und gestaltet werden, dass ein gerichteter Wirbel der Reaktionsprodukte im Ringraum entsteht. Die Deflektorelemente haben zudem den positiven Effekt, dass die noch flüssigen Bestandteile der Reaktionsprodukte bei ihrem Aufprall auf die Deflektorelemente in kleinere Einheiten zerspringen, was zu einer Vergrößerung der Gesamtoberfläche der flüssigen Bestandteile und damit zu einem schnelleren Übergang in die Gasphase führt.

Weiterhin kann der erfindungsgemäße Gasgenerator so ausgebildet sein, dass die Deflektorelemente in einem bezogen auf die Längsachse der mindestens einen Brennkammer radial außen angeordneten Teil eine den Reaktionsprodukten eine tangentiale Geschwindigkeitskomponente aufgebende Form aufweisen. Diese Form kann beispielsweise der einer Turbinenschaufel entsprechen. Die Strömung der Reaktionsprodukte trifft nach ihrem Austritt aus einer der Austrittsöffnungen zunächst auf eine z.B. im wesentlichen senkrecht zur Ausströmungsrichtung ausgerichtete Prallwand des zugehörigen Deflektorelements und gelangt hiernach zum radial außenliegenden Bereich des Deflektorelements auf die in Strömungsrichtung gesehen z.B. konkave Innenseite des turbinenschaufelförmigen Teils, das so ausgerichtet ist, dass die Strömung hierdurch eine Geschwindigkeitskomponente in Umfangsrichtung des Ringraumes erhält. Der radial außenliegende Teil kann alternativ auch eben und gegenüber dem übrigen Teil des Deflektorelements in geeigneter Weise abgewinkelt sein. Durch eine aufeinander abgestimmte Ausrichtung der Deflektorelemente wird somit in effektiver Weise ein gemeinsamer Drall der Strömung der Reaktionsprodukte im Ringraum erzeugt.

Es kann für jede Austrittsöffnung ein separates Deflektorelement vorgesehen sein. Der erfindungsgemäße Gasgenerator kann aber auch so ausgebildet sein, dass die Deflektorelemente Teile eines einstückigen, an der mindestens einen, die Austrittsöffnungen aufweisenden Stirnwand angeordneten Aufsatzelements sind. Bei dieser Ausbildungsform ist also die Vielzahl an einzelnen Deflektorelemente zu einem einstückigen Aufsatzelement "verschmolzen". Derartige Aufsatzelemente können durch einfache Formprozesse, z. B. Pressen, hergestellt und an der die Austrittsöffnungen aufweisenden Stirnwand z. B. mittels Punktschweißen oder Pressschweißen fixiert werden. Gegenüber einer Vielzahl separater und somit auch separat zu fixierender Deflektorelemente ist die Herstellung und Anbringung eines einstückigen Aufsatzelements mit deutlich verringertem Aufwand verbunden.

Es kann vorteilhaft sein, den erfindungsgemäßen Gasgenerator so auszubilden, dass das Aufsatzelement gleichzeitig Teil des Gehäuses des Gasgenerators ist. Hierdurch können Materialkosten eingespart werden.

Der erfindungsgemäße Gasgenerator kann auch so ausgebildet sein, dass der Gasauslass des Ringraums durch einen zum Teil vom Ringraum umgebenen und konzentrisch zum Ringraum angeordneten, aus dem Gehäuse des Gasgenerators herausführenden Auslassstutzen gegeben ist. Diese Variante eignet sich insbesondere für schlauchähnlich geformte Airbags, wie sie in der Regel für den seitlichen Aufprallschutz in Kraftfahrzeugen verwendet werden. Die Gaseintrittsöffung des Airbags kann über den Auslassstutzen gestülpt sein.

Des weiteren kann es vorteilhaft sein, den erfindungsgemäßen Gasgenerator so auszubilden, dass in beiden Stirnwänden Austrittsöffnungen sowie an beiden Stirnwänden Deflektorelemente zur Strömungsdrallerzeugung vorgesehen sind. Hierdurch können die bei der Zündung entstehenden Reaktionsprodukte schneller aus der Brennkammer entweichen, da für einen Teil der Ladung der Weg zu den Austrittsöffnungen kürzer ist. Die für die vollständige Füllung des Airbags notwendige Zeit kann auf diese Weise deutlich reduziert werden.

Der erfindungsgemäße Gasgenerator kann auch so ausgebildet sein, dass zwei Brennkammern mit jeweils einem Zündelement vorgesehen sind. Hierdurch kann der Gasgenerator zweistufig betrieben werden, was insbesondere bei großvolumigen Airbags, beispielsweise für den Beifahrerbereich, vorteilhaft sein kann. Zudem kann eine Anpassung der erforderlichen Gasmenge in Abhängigkeit von den Umständen des Unfalls erfolgen.

Schließlich kann der erfindungsgemäße Gasgenerator so ausgebildet sein, dass beide Brennkammern von demselben Ringraum umgeben und in Axialrichtung des Ringraumes gesehen hintereinander angeordnet sind, wobei die die Auslassöffnungen aufweisende Stirnwand der einen Brennkammer die die Austrittsöffnungen aufweisende Stirnwand der anderen Brennkammer einander abgewandt sind. Damit kann der Gasgenerator weitgehend symmetrisch und platzsparend ausgebildet werden. Die die Austrittsöffnungen aufweisenden Stirnflächen können dabei gleichzeitig zur Halterung der Zündelemente dienen.

Die Erfindung wird nachstehend anhand von 5 Ausbildungsbeispielen näher erläutert. In den zugehörigen Zeichnungen zeigen schematisch
- Fig. 1:: im seitlichen Querschnitt eine erste Ausbildungsform mit Austrittsöffnungen und Zündelementhalterung in derselben Stirnwand der Brennkammer,
- Fig. 2:: einen Schnitt durch die erste Ausbildungsform gemäß den Pfeilen in Fig. 1,
- Fig. 3:: eine zweite Ausbildungsform des Gasgenerators mit Austrittsöffnungen an der der Zündelementhalterung gegenüberliegenden Stirnwand,
- Fig. 4:: eine dritte Ausbildungsform des Gasgenerators mit Austrittsöffnungen an beiden Stirnwänden,
- Fig. 5:: eine Ausbildungsform des Gasgenerators mit zwei Brennkammern,
- Fig. 6:: einen vergrößerten Ausschnitt aus dem Gasgenerator gem. Fig. 5, und
- Fig. 7:: eine fünfte Ausbildungsform des Gasgenerators mit rohrförmigem Gasauslassstut- zen.

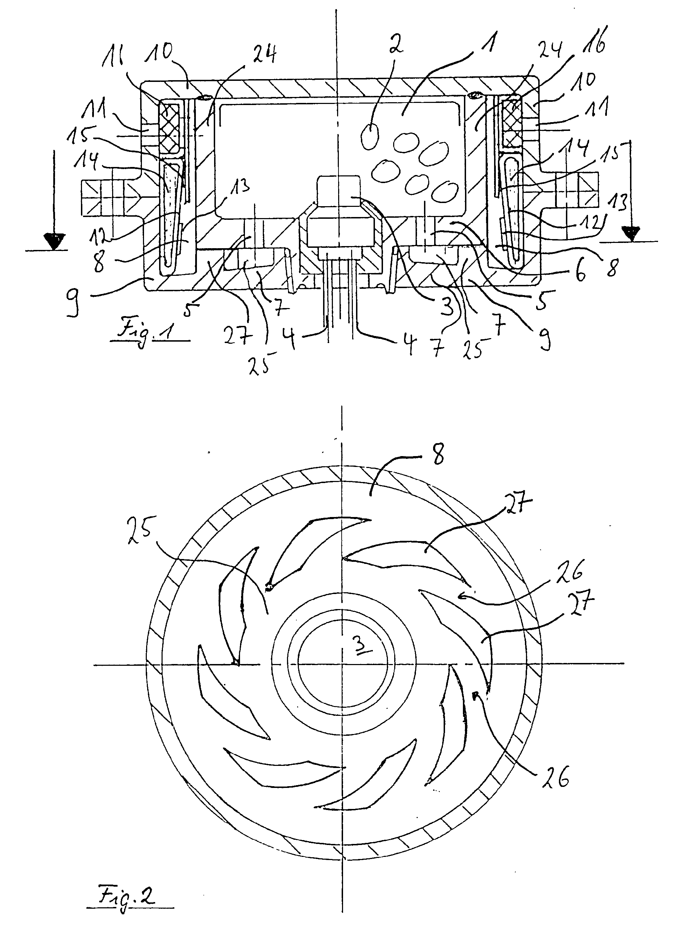

Fig. 1 zeigt einen Gasgenerator für einen Airbag im seitlichen Querschnitt. In einer Brennkammer 1 sind Feststofftabletten 2 enthalten, die mittels eines über elektrische Leitungen 4 aktivierbaren Zündelements 3 gezündet werden können. Bei einer Zündung werden die Feststofftabletten 2 explosionsartig in ein Gemisch aus Reaktionsprodukten umgesetzt, das zum größten Teil gasförmige, aber - zumindest unmittelbar nach der Zündung - auch flüssige Anteile sowie Festkörperpartikel enthält. Die Reaktionsprodukte entweichen über in einer Stirnwand 6 vorgesehene Austrittsöffnungen 5 der Brennkammer 1. In derselben Stirnwand 6 ist auch das Zündelement 3 mittig fixiert. Nach ihrem Austritt prallen die Reaktionsprodukte auf ein Aufsatzelement 7. Das Aufsatzelement 7 bildet unmittelbar oberhalb der Austrittsöffnungen 5 einen ringförmigen Prallraum 25 (siehe auch Fig. 2) mit Auslässen 26 zu einem Ringraum 8, der konzentrisch um die im wesentlichen zylindrische Brennkammer 1 herum angeordnet ist. Das Aufsatzelement 7 weist in seinem radial äußeren Bereich Leitelemente 27 auf, deren Anordnung in Fig. 2 verdeutlicht ist, die einen Schnitt durch den Gasgenerator gemäß Fig. 1 in Höhe der Pfeile darstellt. Die aus den Austrittsöffnungen 5 austretenden Reaktionsprodukte prallen im Prallraum 25 zunächst auf das Aufsatzelement 7 und werden von dort nach radial außen geleitet. Die Leitelemente 27 sind turbinenschaufelartig geformt und derart angeordnet, dass die auf sie auftreffenden Reaktionsprodukte im Wesentlichen in Bezug auf die Längsmittelachse der Brennkammer 1 eine Geschwindigkeitskomponente in Umfangsrichtung erhalten. Durch die rotationssymmetrische Anordnung der Leitelemente 27 wird der Strömung der Reaktionsprodukte ein gemeinsamer Drall auferlegt, der sich im Ringraum 8 fortsetzt.

Beim Aufprall auf das Aufsatzelement 7 im Aufprallraum 25, aber auch im Bereich der Leitelemente 27 werden zudem die flüssigen Anteile des Gemischs der Reaktionsprodukte in kleinere Einheiten aufgesprengt. Hierdurch wird insgesamt eine Vergrößerung der Oberfläche der flüssigen Phase bewirkt, die zu einem schnelleren Übergang in die gasförmige Phase führt. Das Aufsatzelement 7 ist einstückig mit einer ersten Gehäusewand 9 ausgebildet. Die erste Gehäusewand 9 bildet gleichzeitig einen Teil der äußeren Wand des Ringraumes 8, durch den sich die Reaktionsprodukte aufgrund des Dralls mit einer erheblichen Geschwindigkeitskomponente in Umfangsrichtung bewegen. Der Ringraum 8 ist zudem außen von einer zweiten Gehäusewand 10 des Gasgenerators sowie durch die zylindrische Umfangswand 24 der Brennkamer 1 begrenzt. Durch mehrere in der zweiten Gehäusewand 10 eingebrachte Gasauslässe 11 können die gasförmigen Anteile der Reaktionsprodukte radial nach außen entweichen und einem hier nicht dargestellten Airbag zugeführt werden.

Um möglichst weitgehend einen Eintritt der im Gemisch der Reaktionsprodukte befindlichen heißen Feststoffpartikel in den Airbag zu verhindern, ist eine Fliehkraftabscheidung vorgesehen. Hierfür treffen die mit dem Drall versehenen Reaktionsprodukte im Ringraum 8 auf eine Zwischenwand 12. Aufgrund der gegebenen Fliehkräfte gelangen die Festkörperpartikel an diese Zwischenwand 12 und kondensieren an ihr oder werden an ihr entlanggeführt. In der Zwischenwand 12 sind durch Ausklinkungen Einfangöffnungen 13 gebildet, die den radial außenliegenden Reaktionsproduktstrom und damit auch die Festkörperpartikel auffangen und in den hinter der Zwischenwand 12 gelegenen Hohlraum 14 leiten. Der Hohlraum 14 ist mit nicht gesondert dargestellter Metallwolle gefüllt, an der die Partikel kondensieren und anhaften. Die Zwischenwand 12 weist zudem nicht gesondert dargestellte Druckausgleichöffnungen auf, durch die die gasförmigen Bestandteile der Reaktionsprodukte wieder entweichen können. Die Zwischenwand 12 ist konisch ausgebildet, so dass die Reaktionsprodukte in einer Spiralbahn beschleunigt geführt werden. Feststoffpartikel, die nicht durch die Einfangöffnungen 13 aufgefangen wurden, gelangen in einen Staubauffangraum 15. Die von Festkörperpartikeln weitestgehend befreiten gasförmigen Bestandteile der Reaktionsprodukte erreichen dann über Filter 16 die Gasauslässe 11. Der hier dargestellte für die Fliehkraftabscheidung vorgesehene Aufbau im Ringraum 8 ist bereits aus der DE 197 16 652 A1 bekannt, auf deren Offenbarungsgehalt hier explizit Bezug genommen wird.

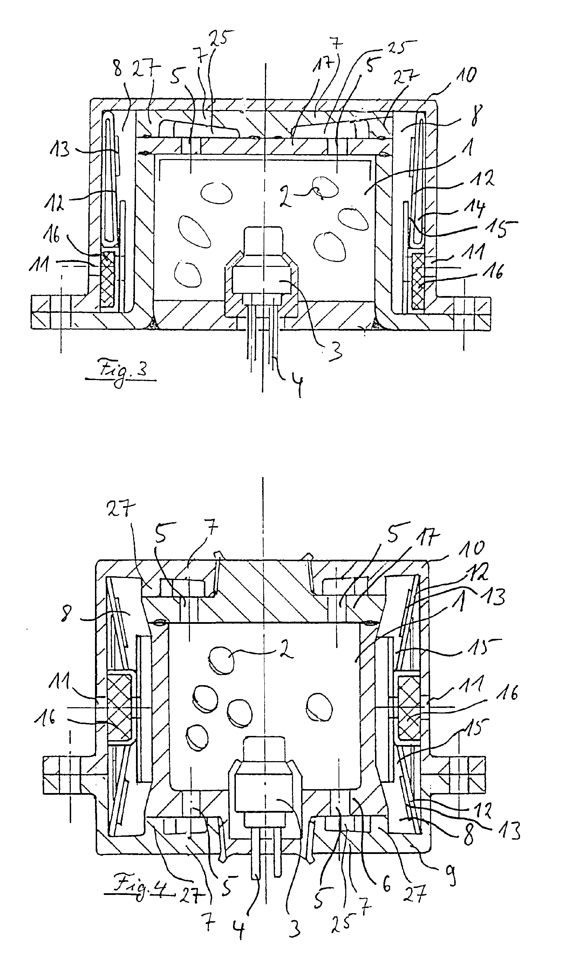

Fig. 3 zeigt eine der Fig. 1 ähnliche Ausbildungsform des erfindungsgemäßen Gasgenerators. Hier sind die Austrittsöffnungen 5 an der dem Zündelement 3 gegenüberliegenden Stirnwand 17 der Brennkammer 1 angeordnet. In Strömungsrichtung der aus den Austrittsöffnungen 5 gelangenden Reaktionsprodukte gesehen ist hinter der Stirnwand 17 das einstückige Aufsatzelement 7 vorgesehen, das Leitelemente 27 aufweist, die in Bezug auf die Austrittsöffnungen 5 in der gleichen Weise angeordnet sind wie in der Ausbildungsform gemäß Fig. 1 und 2. Das Aufsatzelement 7 ist durch eine einfache Schweißverbindung, z.B. Punkt- oder Druckschweißen, mit der Stirnwand 17 verbunden und wird zudem durch die Gehäusewand 10 gehalten. Der Weg der Reaktionsprodukte ist äquivalent zu dem in der Ausbildungsform gemäß den Fig. 1 und 2. Bezüglich der im Ringraum 8 angeordneten Elemente zur Fliehkraftabscheidung wird zur Vermeidung von Wiederholungen auf die Darstellung zu Fig. 1 verwiesen. In Fig. 1 und 2 sind einander entsprechende Elemente mit den gleichen Bezugszahlen versehen.

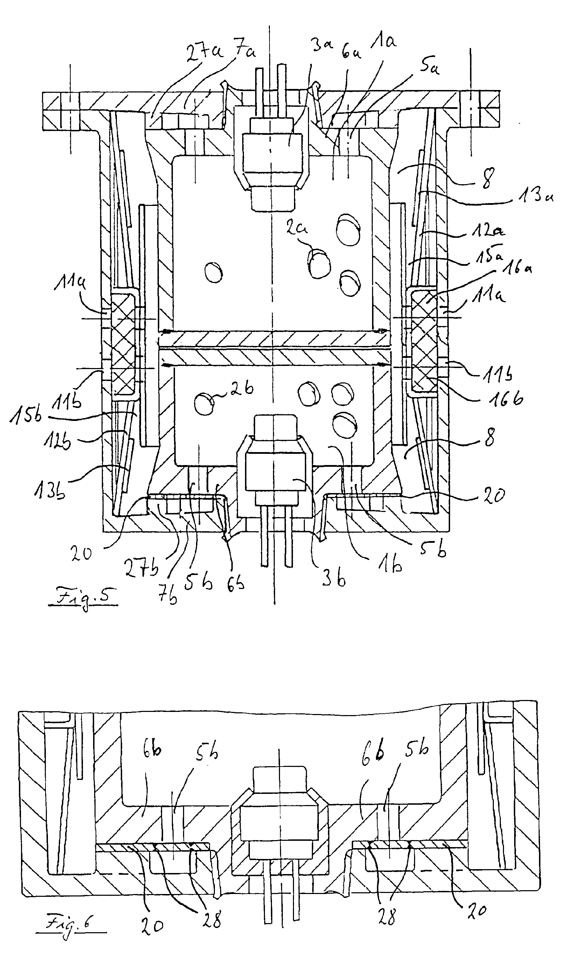

In der in Fig. 4 dargestellten weiteren Ausbildungsform sind Austrittsöffnungen 5 an beiden Stirnwänden 6 und 17 der Brennkammer 1 vorgesehen. Im Bereich beider Stirnwände 6 und 17 sind über den Austrittsöffnungen in der zu Fig. 1 beschriebenen Weise Aufsatzelemente 7 angeordnet, die die bei der Zündung der Feststofftabletten 2 entstehenden Reaktionsprodukte in den Ringraum 8 leiten. Das an der dem Zündelement 3 gegenüberliegenden Stirnwand 17 angeordnete Aufsatzelement 7 ist Teil der einstückigen zweiten Gehäusewand 10, die über Schraubverbindung mit der ersten Gehäusewand 9 verbunden ist. Die Gasauslässe 11 befinden sich nunmehr in etwa der Mitte des Ringraums 8. Die Elemente zur Fliehkraftabscheidung sind nun doppelt vorhanden und beidseitig der Gasauslässe 11 angeordnet. Wegen der diesbezüglichen Beschreibung wird wiederum auf die Darstellung zu Fig. 1 verwiesen. Da in beiden Stirnwänden 6 und 17 Austrittsöffnungen vorgesehen sind, können die Reaktionsprodukte nach der Zündung der Feststofftabletten 2 schneller entweichen, da für einen Großteil der Reaktionsprodukte nunmehr der Weg kürzer ist. Auf diese Weise kann die für das Aufblasen des Airbag benötigte Zeit erheblich reduziert werden.

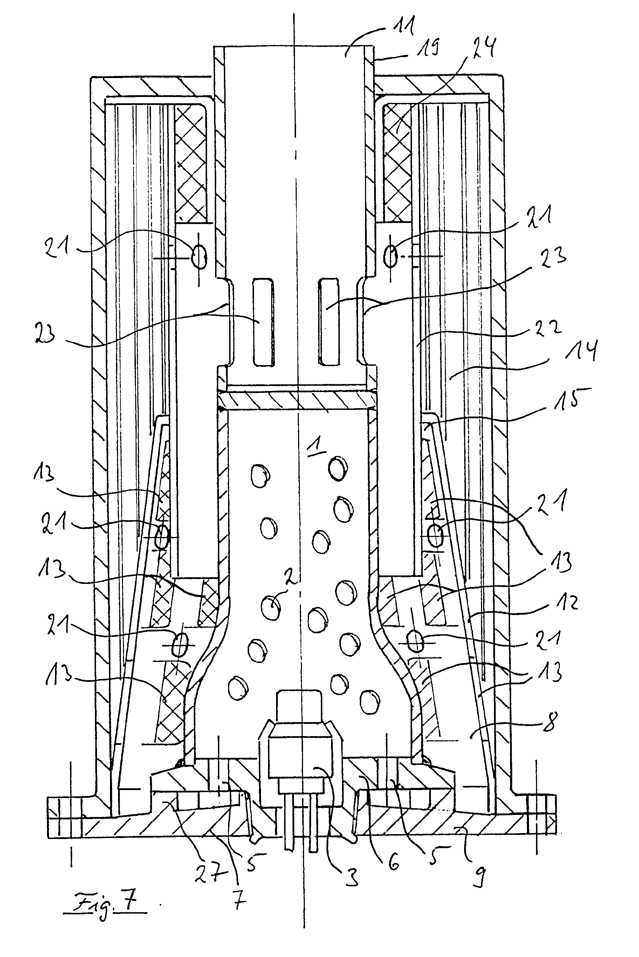

Bei der in Fig. 5 dargestellten weiteren Ausbildungsform eines Gasgenerators sind zwei Brennkammern 1a und 1b mit jeweils einem Zündelement 3a bzw. 3b vorgesehen. Die Austrittsöffnungen 5a bzw. 5b sowie die Aufsatzelemente 7a bzw. 7b befinden sich jeweils an derselben Stirnwand 6a bzw. 6b, von der auch das Zündelement 3a bzw. 3b gehalten ist. Dieser Gasgenerator kann zweistufig betrieben werden, d. h. die in den Brennkammern 1a und 1b befindlichen Ladungen können kontrolliert zeitlich nacheinander gezündet werden. Es ist notwendig, einen Eintritt der heißen Reaktionsprodukte der zuerst gezündeten Brennkammer 3a in Austrittsöffnungen 5b der noch nicht gezündeten Brennkammer 3b und damit deren versehentliches Zünden aufgrund der hohen Temperatur der Reaktionsprodukte zu verhindern. Hierfür ist eine an der Stirnwand 6b angeordnete, die Austrittsöffnungen 5b abdeckende ringförmige Abdeckung 20 vorgesehen. Aufbau und Anordnung der Abdeckung 20 sind in Fig. 6 verdeutlicht, welche einen vergrößerten Ausschnitt aus Fig. 5 wiedergibt. Das aus der zuerst gezündeten Brennkammer 1a entweichende Gemisch der Reaktionsprodukte kann die Abdeckung 20 nicht in Richtung vom Ringraum 8 hin zu den Austrittsöffnungen 5b der noch nicht gezündeten Brennkammer 1b durchdringen. Die Abdeckung 20 erlaubt allerdings das Durchdringen der Reaktionsprodukte aus der später gezündeten Brennkammer 1b auf ihrem Weg zum Ringraum 8. Hierfür weist die Abdeckung 20 um jede Austrittsöffnung 5b herum eine Sollbruchlinie 28 auf, die beispielsweise aus beidseitigen Einkerbungen in der Abdeckung 20 gegeben sein kann. Der Druck der in der gezündeten Brennkammer 1b entstehenden Reaktionsprodukte bewirkt eine Ablösung der von den kreisförmigen Sollbruchlinien 28 umgebenen Teile der Abdeckung 20, so dass die Reaktionsprodukte entweichen können. Die Reaktionsprodukte aus der zuerst gezündeten Kammer 1a zerstören hingegen die Abdeckung 20 nicht, da der Durchmesser der Sollbruchlinien 28 den der Austrittsöffnungen 5b übersteigt und somit die Stirnwand 6b die Abdeckung stützt. Die Abdeckung hat somit ein Art Ventilfunktion. Anstelle der Abdeckung 20 könnte auch eine hier nicht dargestellte Trennwand zwischen den Gasauslässen 11a einerseits und 11b andererseits vorgesehen werden, so dass der Ringraum 8 in zwei Teile geteilt ist.

Hinsichtlich der Funktion der für die Fliehkraftabscheidung vorgesehenen Mittel wird auf die Darstellung zu Fig. 1 verwiesen. Einander entsprechende Elemente weisen die gleichen Bezugszeichen auf, die allerdings in Fig. 5 gegebenenfalls noch mit einer Erweiterung "a" oder "b", je nach Zuordnung zu einer der Brennkammern 1a oder 1b, versehen sind.

Fig. 6 zeigt schließlich eine Ausbildungsform des Gasgenerators, bei der der Gasauslass 11 durch einen sich axial erstreckenden Auslassstutzen 19 gegeben ist. Der axial gerichtete Gasauslass 11 ist in besonderer Weise vorteilhaft bei schlauchartig geformten Airbags, wie sie in Personenkraftfahrzeugen in der Regel für den Seitenaufprallschutz eingesetzt werden. Die Brennkammer 1 mit den Feststofftabletten 2 weist an der Stirnwand 6 sowohl die Austrittsöffnungen 5 für die Reaktionsprodukte als auch das Zündelement 3 auf. Das Aufsatzelement 7 ist einstückig mit der ersten Gehäusewand 9 ausgebildet und gibt in einer zu den Ausbildungsformen der Fig. 1 bis 5 entsprechenden Weise den Reaktionsprodukten bei ihrem Weg in den Ringraum 8 einen Strömungsdrall auf. Der Ringraum 8 weist wie in den Ausbildungsformen gemäß Fig. 1 bis 5 eine Zwischenwand 12 mit Einfangöffnungen 13 auf, die hier allerdings in mehreren Reihen übereinander angeordnet sind. In Fig. 6 sind auch die Druckausgleichöffnungen 21 sichtbar, die in Fig. 1 bis 5 nicht gesondert dargestellt, jedoch in den zugehörigen Ausbildungsformen vorgesehen sind. Der konische Teil 12 der Zwischenwand ist an einem zylindrischen Teil 22 angeschlossen, wodurch der Staubauffangraum 15 gebildet ist. Der Auslassstutzen 19 ist konzentrisch zum Ringraum 8 innerhalb des zylindrischen Teils 22 der Zwischenwand 12 angeordnet und weist an seinem der Brennkammer 1 zugewandten Ende Öffnungen 23 für den Eintritt des gasförmigen Anteils der Reaktionsprodukte in den Auslassstutzen 19 auf. Oberhalb der Öffnungen 23 ist im Ringraum 8 noch ein ringförmiges Filterelement 24 vorgesehen, in das sich Festkörperpartikel verfangen, die nicht durch den Hohlraum 14 oder den Staubauffangraum 15 aufgefangen wurden.

### Bezugszeichenliste

- 1: Brennkammer
- 2: Feststofftabletten
- 3: Zündelement
- 4: elektrische Leitungen
- 5: Austrittsöffnungen
- 6: Stirnwand
- 7: Deflektorelement
- 8: Ringraum
- 9: erste Gehäusewand
- 10: zweite Gehäusewand
- 11: Gasauslass
- 12: Zwischenwand
- 13: Einfangöffnungen
- 14: Hohlraum
- 15: Staubauffangraum
- 16: Filter
- 17: Stirnwand
- 19: Auslassstutzen
- 20: Abdeckung
- 21: Druckausgleichsöffnungen
- 22: zylindrischer Teil der Zwischenwand
- 23: Öffnung
- 24: Umfangswand
- 25: Prallraum
- 26: Auslass
- 27: Leitelemente
- 28: Sollbruchlinie

## Patentansprüche

1. Gasgenerator, insbesondere für einen Airbag, umfassend
a) mindestens eine ein gaserzeugendes Material enthaltende, durch eine Umfangswand (24) und zwei Stirnwände (6,17) begrenzte Brennkammer (1) mit Austrittsöffnungen (5) für die im Zündungsfall entstehenden Reaktionsprodukte,
b) eine Fliehkraftabscheidereinheit mit einem im wesentlichen konzentrisch um die mindestens eine Brennkammer (1) angeordneten, mindestens einen Gasauslass (11) zum Airbag hin aufweisenden Ringraum (8) sowie
c) Mittel zur Erzeugung eines Strömungsdralls der durch die Austrittsöffnungen (5) in den Ringraum (8) gelangten Reaktionsprodukte,
**dadurch gekennzeichnet, dass**
d) sich die Austrittsöffnungen (5) in zumindest einer der Stirnwände (6,17) befinden und
e) die Mittel zur Erzeugung eines Strömungsdralls in Strömungsrichtung der Reaktionsprodukte gesehen hinter den Austrittsöffnungen (5) angeordnete Deflektorelemente umfassen.

2. Gasgenerator nach Anspruch 1, **dadurch gekennzeichnet, dass** die Deflektorelemente in einem bezogen auf die Längsachse der mindestens einen Brennkammer (1) radial außen angeordneten Teil (27) eine den Reaktionsprodukten eine tangentiale Geschwindigkeitskomponente aufgebende Form aufweisen.

3. Gasgenerator nach Anspruch 1 oder 2, **dadurch gekennzeichnet, dass** die Deflektorelemente Teile eines einstückigen, an der mindestens einen, die Austrittsöffnungen (5) aufweisenden Stirnwand (6,17) angeordneten Aufsatzelements (7) sind.

4. Gasgenerator nach Anspruch 3, **dadurch gekennzeichnet, dass** das Aufsatzelement (7) gleichzeitig Teil des Gehäuses (9,10) des Gasgenerators ist.

5. Gasgenerator nach einem der Ansprüche 1 bis 4, **dadurch gekennzeichnet, dass** der Gasauslass (11) des Ringraums (8) durch einen zum Teil vom Ringraum (8) umgebenen und konzentrisch zum Ringraum (8) angeordneten, aus dem Gehäuse (9,10) des Gasgenerators herausführenden Auslassstutzen (19) gegeben ist.

6. Gasgenerator nach einem der Ansprüche 1 bis 5, **dadurch gekennzeichnet, dass** in beiden Stirnwänden (6,17) Austrittsöffnungen (5) sowie an beiden Stirnwänden (6,17) Deflektorelemente zur Strömungsdrallerzeugung vorgesehen sind.

7. Gasgenerator nach einem der Ansprüche 1 bis 6, **dadurch gekennzeichnet, dass** zwei Brennkammern (1a,1b) mit jeweils einem Zündelement (3a,3b) vorgesehen sind.

8. Gasgenerator nach Anspruch 7, **dadurch gekennzeichnet, dass** beide Brennkammern (1a,1b) von demselben Ringraum (8) umgeben und in Axialrichtung des Ringraumes (8) gesehen hintereinander angeordnet sind, wobei die die Austrittsöffnungen (5a) aufweisende Stirnwand (6a) der einen Brennkammer (1a) und die die Auslassöffnungen (5b) aufweisende Stirnwand (6b) der anderen Brennkammer (1b) einander abgewandt sind.
